# EUROPEAN PATENT SPECIFICATION

(11) **EP 0 553 916 B1**
(45) Date of publication and mention of the grant of the patent: **10.07.1996**
(21) Application number: 93200147.2
(22) Date of filing: 21.01.1993
(51) Int. Cl.: F16H 57/04

(54) **Motor vehicle gearbox with forced lubrication of the idle gear wheels**
Fahrzeuggetriebe mit Zwangsschmierung der freilaufenden Zahnräder
Boîte de vitesses pour véhicule automobile avec lubrication forcée des engrenages libres

(30) Priority: 28.01.1992 IT MI920150
(43) Date of publication of application: 04.08.1993
(73) Proprietor: FIAT AUTO S.p.A., I-10135 Torino (IT)
(72) Inventor: Galdi, Paolo, I-80127 Napoli (IT)
(74) Representative: Fusina, Gerolamo

(56) References cited:
- EP-A- 0 210 119
- US-A- 2 247 732
- US-A- 2 487 350
- US-A- 4 327 598

## Description

This invention relates to a motor vehicle gearbox with forced lubrication of the idle gear wheels.

Known vehicle gearboxes present problems relative to the lubrication of those gear wheels idly associated with the splined driven shaft, or transmission shaft, of the gearbox by way of interposed metal bushes mounted on said shaft.

In a first known construction, the gearbox is lubricated by providing recesses in the gearbox casing to collect the splashing oil. These recesses in a certain manner convey the oil to the interior of the shaft on which the idle gear wheels rotate so that the oil is able to lubricate the mutually sliding surfaces.

In this case, pressure is almost absent or is so low as not to be sufficient for the necessary lubrication. In addition, one end of the shaft on which the gear wheels are mounted has to be free in order to allow this lubrication.

It is well known that difficult and non-continuous lubrication often results in seizure between the moving parts, with consequent damage resulting in a faulty gearbox and stoppage of the vehicle. Further known vehicle gearboxes have to be provided with internal or external pumps for the specific purpose of lubrication. Thes pumps have to be housed in suitable spaces, and in addition to perform their task they have to be provided with the relative controls. This results in increased cost and difficulties in positioning the parts which control and effect the lubrication. U.S. 2.247.732 describes a drive mechanism with lubrication provided by an arrangement according to the preamble of claim 1.

The object of the present invention is to achieve optimum lubrication without the provision of separate devices for this purpose and with the elimination of seizure which, as is well known, leads to considerable cost in terms of vehicle down-time, removal and overhaul of ruined parts and final reassembly. This object is attained according to the present invention by a motor vehicle gearbox according to the preamble and characterizing part of claim 1.

In this manner good lubrication of the sliding surfaces is advantageously ensured without the need for external devices. Moreover with an arrangement in accordance with the present invention an improved pumping effect on the oil within the idle gear wheels, within the bushes and along the shaft is achieved. The characteristics of, and the advantages deriving from, a motor vehicle gearbox according to the present invention will be more apparent from the description of a non-limiting embodiment thereof given with reference to the accompanying drawings in which:
Figure 1 is a longitudinal section showing a driven shaft carrying the relative gear wheels of a motor vehicle gearbox according to the present invention;

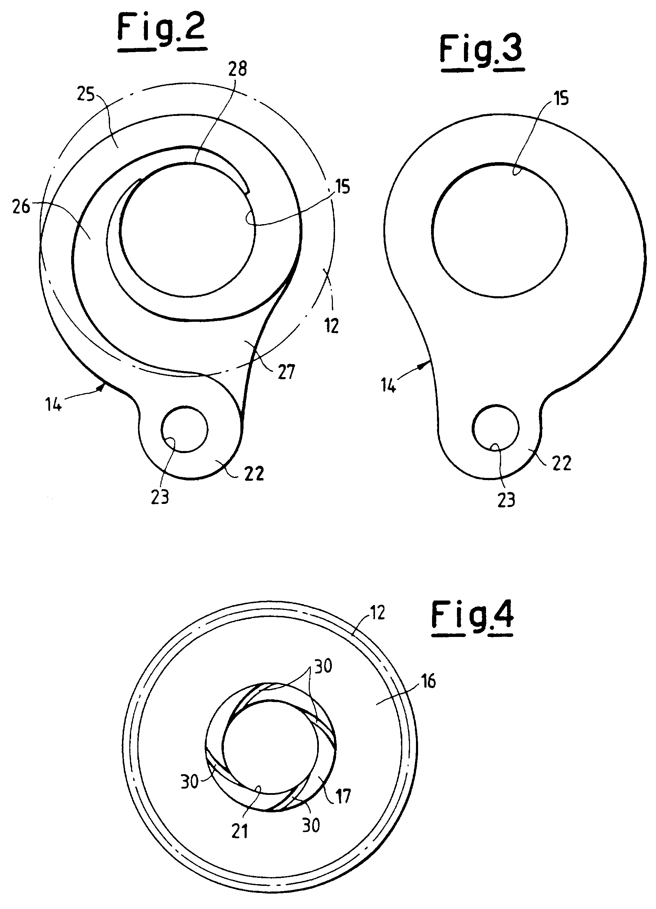

Figure 2 is a side view on the line II-II of Figure 1 showing only the baffle element;
Figure 3 is a side view of the opposite surface of the baffle element of Figure 2; and
Figure 4 is a side view on the line IV-IV of Figure 1 showing only the first gear wheel.

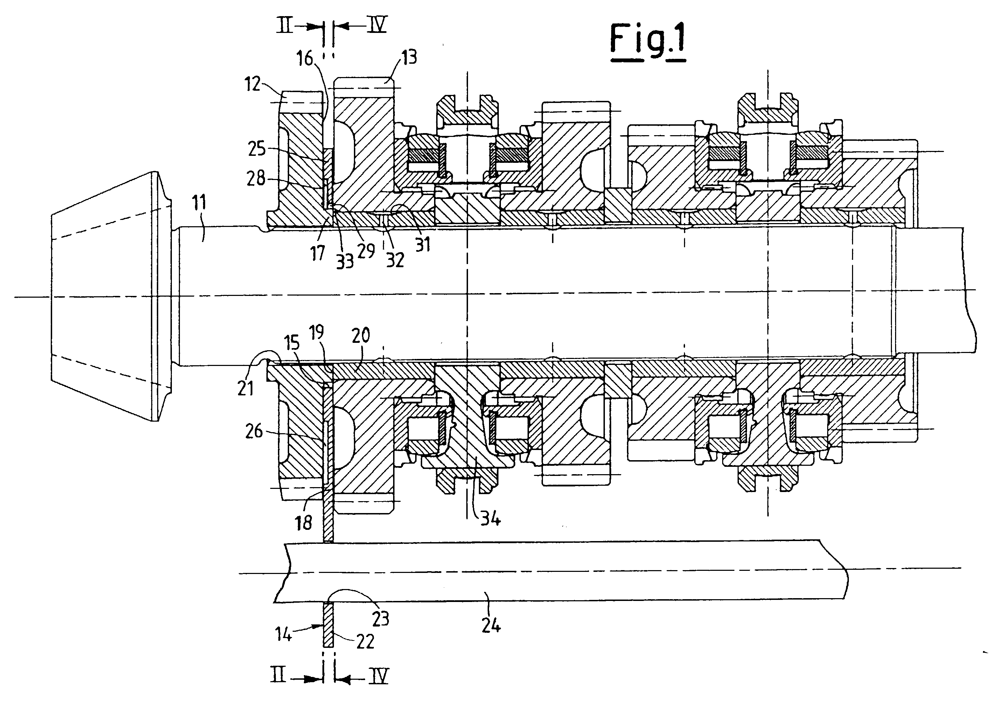

With reference to the figures, a motor vehicle gearbox is only partly represented by a splined driven shaft 11 (Figure 1), for example its transmission shaft, on which a series of gear wheels relative to the individual gear speeds is mounted, and of which for example a first gear wheel 12 is that relative to reverse gear and a second gear wheel 13 is that relative to first gear.

Between the first gear wheel 12 and the second gear wheel 13 there is positioned a flat baffle element, indicated overall by 14, which comprises a central through hole 15 to enable it to be mounted on the driven shaft 11. In the illustrated example, as the first gear wheel 12 is provided on that lateral surface 16 facing the baffle element 14 with a cylindrical extension 17 coaxial to the driven shaft 11, the central hole 15 is mounted on said cylindrical extension 17, which has a length equal to the thickness of the baffle element 14.

The other surface of the baffle element 14 faces the lateral surface 18 of the second gear wheel 13 and the end surface 19 of a bush 20 on which the second gear wheel 13 is idly positioned.

The first gear wheel 12 is secured to the shaft 11 by the fact of its inner hole 21 being splined complementarily to the outer surface of the shaft 11.

As stated, the second gear wheel 13 is supported idly on the shaft 11 via the bush 20, which rotates with the shaft 11, being locked between the cylindrical extension 17 and a splined crosspiece 34.

The splining of the crosspiece 34 has at least one tooth missing to facilitate the flow of oil.

The flat baffle element 14 is downwardly elongate, whereat in a portion 22 it is provided with a hole 23 parallel to the axis of the driven shaft 11 to receive a gear control rod 24, shown partially in Figure 1.

That surface 25 of the baffle element 14 facing the flat wall of the first gear wheel 12 comprises a helical recess 26 eccentric to the shaft 11. The ends of the helical recess 26 are in the form of a first downwardly facing widened mouth 27, and a second mouth 28 radially facing the interior of the shaft 11 or rather looking down on the cylindrical extension 17 of the first gear wheel 12.

The cylindrical extension 17 has a lesser diameter than the central hole 15 of the flat baffle element 14 and hence an annular chamber 29 is created between the baffle element 14 and the cylindrical extension 17. The chamber 29 is circumferential and aligned with said second mouth 28 of the baffle element 14. In the illustrated example, in that surface of the cylindrical extension facing the bush 20 there are provided passageways or channels 30 having a suitable inclination or in the form of a portion of a spiral, and leading to the driven shaft 11.

In this manner the rotation of the first gear wheel 12 causes the oil into which it dips in the gearbox casing, or the oil received as a result of the oil splashes, to be dragged towards the first mouth 27 of the baffle element 14, which is arranged slidable but not rotatable on the driven shaft 11.

The oil is urged to rise within the recess 26 by the rotation of the first gear wheel 12 and is dragged into proximity with the second mouth 28 of the baffle element 14.

The second mouth 28 faces the chamber 29 which acts as an element for drawing it towards the interior of the gear wheel. The oil passes through the channels 30, the inclination of which facilitates its flow or pumping, and then towards the interior or towards the splined shaft 11.

Lubrication of the shaft is hence achieved, after which the oil passes to the bush 20 of the second gear wheel 13.

Having arrived thereat, the oil follows a perimetral flared entry portion 33 formed on the front of the second gear wheel 13, to pass between the surface of the interior hole in the gear wheel 13 and the outer surface of the bush 20. Because of the presence of a groove 31 provided perimetrally in the outer surface of the bush 20, and of at least one radial hole 32 directed towards the centre of rotation, the oil then passes towards the centre of the second gear wheel 13 on the splined shaft 11. The oil then continues the lubrication of the subsequent gear wheels arranged on the splined shaft 11 by flowing through the splines and along the annular grooves or recesses in the bushes and through the holes of the further bushes.

In the illustrated embodiment the passageways or channels 30 are four in number and are offset by about 90° from each other.

A vane pump or similar arrangement is hence achieved within the body of the first gear wheel 12 which enables the shaft, the bushes and the successive idle gear wheels mounted on the splined shaft 11 to be lubricated in succession.

The baffle element arrangement 14 could also be associated with a portion of a gear wheel rotatably rigid with the shaft, and in which straight closed channels are formed within the body of the gear wheel, not necessarily in that surface facing the next bush or gear wheel.

In a further possible embodiment, not shown, if possible the arrangement of the present invention for pumping the lubricating oil can be repeated a number of times along the driven shaft to improve lubrication.

A further advantage of the arrangement according to the present invention is that because of the large size of the baffle element, the recess 26 is also large and consequently provides excellent feed towards the helical pumping zone.

## Claims

1. A motor vehicle gearbox with forced lubrication of the idle gear wheels, comprising a housing, a driven shaft (11) with a splined surface and on which the gear wheels (12, 13) for the various gear speeds are mounted, rotatably supported on respective bushes (20) secured to said driven shaft (11), where in correspondence with at least one of said gear wheels (12, 13) there is associated a flat baffle element (14) comprising a central through hole (15) to enable it to be mounted free on said shaft (11) or on one of said gear wheels (12, 13), said flat baffle element (14) comprising on a first lateral surface (16) a helical recess (26) which is eccentric to said shaft (11) and whose ends are in the form of a first mouth (27) and a second mouth (28) facing said shaft (11), that a surface (25) of said at least one (12) of said gear wheels which faces said flat baffle element (14) comprising, associated with said second mouth (28) of said flat baffle element (14), at least one passageway (30) which connects said second mouth (28) to said driven shaft (11) in proximity to one of said bushes (20), characterised in that said flat baffle element (14) is fixed with respect to said housing such that said first mouth (27) faces the downwardly extending periphery (22) of said flat baffle element (14).

2. A gearbox as claimed in claim 1, characterised in that said at least one passageway (30) is provided in a transverse surface of a cylindrical extension of said at least one gear wheel (12) which is coaxial with said driven shaft (11) and on which said central hole (15) of said baffle element (14) is supported.

3. A gearbox as claimed in claim 1, characterised in that said at least one passageway (30) is in the form of a portion of a spiral.

4. A gearbox as claimed in claim 1, characterised in that said at least one passageway (30) is inclined towards said splined driven shaft (11).

5. A gearbox as claimed in claim 1, characterised in that said at least one passageway (30) consists of four channels positioned offset by about 90° from each other.

6. A gearbox as claimed in claim 2, characterised in that said cylindrical extension of said at least one gear wheel (12) coaxial with said driven shaft (11) and provided with said at least one passageway (30) faces a perimetral flared entry portion formed in the front of an idle gear wheel supported on one of said bushes.

7. A gearbox as claimed in claim 1, characterised in that said at least one (12) of said gear wheels is that relative to first gear.

8. A gearbox as claimed in claim 1, characterised in that said baffle element (14) is lowerly elongate, whereat it is provided with a hole (23) parallel to the axis of said driven shaft and into which a gear control rod (24) can be inserted.

## Patentansprüche

1. Fahrzeuggetriebe mit Zwangsschmierung der freilaufenden Zahnräder, das ein Gehäuse aufweist, eine angetriebene Welle (11) mit einer gekeilten Oberfläche und auf der die Zahnräder (12, 13) für die verschiedenen Gänge montiert sind, die auf entsprechenden Buchsen (20) drehbar gehaltert sind, welche an der angetriebenen Welle (11) befestigt sind, wo in Verbindung mit wenigstens einem Zahnrad (12, 13) ein flaches Ablenkelement (14) zugeordnet ist, das ein zentrales Durchgangsloch (15) aufweist, um zu ermöglichen, daß es frei auf der Welle 11 oder auf einem der Zahnräder (12, 13) gehaltert wird, wobei das flache Ablenkelement (14) eine erste Seitenfläche (16) aufweist, eine spiralförmige Aussparung (26), die zur Welle (11) exzentrisch ist und deren Enden die Form einer ersten Mündung (27) und einer zweiten Mündung (28) haben, die zur Welle (11) hin gerichtet ist, so daß eine Oberfläche (25) des wenigstens einen (12) der Zahnräder, die zum Ablenkelement (14) hin gerichtet ist, in Verbindung mit der zweiten Mündung (28) des flachen Ablenkelementes (14) wenigstens einen Durchtritt (30) aufweist, der die zweite Mündung (28) mit der angetriebenen Welle (11) in der Nähe einer Buchse (20) verbindet, **dadurch gekennzeichnet,** daß das flache Ablenkelement (14) hinsichtlich des Gehäuses derart festgelegt ist, daß die erste Mündung (27) dem sich nach unten erstreckenden Umfang (22) des flachen Ablenkelementes (14) gegenüberliegt.

2. Getriebe nach Anspruch 1, **dadurch gekennzeichnet,** daß der wenigstens eine Durchtritt (30) in einer Querfläche des zylindrischen Vorsprungs des wenigstens einen Zahnrads (12) vorgesehen ist, derart koaxial mit der angetriebenen Welle (11) ist und auf dem das zentrale Loch (15) des Ablenkelementes (14) gehaltert ist.

3. Getriebe nach Anspruch 1, **dadurch gekennzeichnet,** daß der wenigstens eine Durchtritt (30) die Form eines Abschnitts eine Spirale hat.

4. Getriebe nach Anspruch 1, **dadurch gekennzeichnet,** daß der wenigstens eine Durchtritt (30) in Richtung der gekeilten angetriebenen Welle (11) geneigt ist.

5. Getriebe nach Anspruch 1, **dadurch gekennzeichnet,** daß der wenigstens eine Durchtritt (30) aus vier Kanälen besteht, die um etwa 90° zueinander versetzt angeordnet sind.

6. Getriebe nach Anspruch 2, **dadurch gekennzeichnet,** daß der zylindrische Vorsprung des wenigstens einen Zahnrads (12), der koaxial zur angetriebenen Welle (11) und mit dem wenigstens einen Durchtritt (30) versehen ist, einem sich an der äußeren Begrenzung konisch erweiternden Eintrittsabschnitt gegenüberliegt, der auf der Vorderseite eines freilaufenden Zahnrads ausgebildet ist, das auf einer der Buchsen gehaltert ist.

7. Getriebe nach Anspruch 1, **dadurch gekennzeichnet,** daß das wenigstens eine (12) der Zahnräder dasjenige ist, das dem ersten Gang entspricht.

8. Getriebe nach Anspruch 1, **dadurch gekennzeichnet,** daß das Ablenkelement (14) nach unten hin länglich ist, wo es mit einem Loch (23) versehen ist, das parallel zur Achse der angetriebenen Welle ist und in das eine Getriebesteuerstange (24) eingeführt werden kann.

## Revendications

1. Boîte de vitesses pour véhicule automobile comportant une lubrification forcée des roues d'engrenage libres, comprenant un carter, un arbre de sortie (11) comportant une surface cannelée et sur lequel les roues d'engrenage (12, 13) pour les diverses vitesses sont montées, en étant soutenues de façon rotative sur des coussinets (20) respectifs fixés à l'arbre de sortie (11), où, en correspondance avec au moins une des roues d'engrenage (12, 13), se trouve associé un élément de chicane (14) plat comprenant un trou (15) de passage central pour lui permettre d'être monté librement sur cet arbre (11) ou sur l'une des roues d'engrenage (12, 13), l'élément de chicane (14) plat comprenant sur une première surface (16) latérale un évidement (26) hélicoïdal qui est excentrique à l'arbre (11) et dont les extrémités ont la forme d'une première ouverture (27) et d'une deuxième ouverture (28) faisant face à l'arbre (11), cette surface (25) de ladite au moins une (12) des roues d'engrenage qui fait face à l'élément de chicane (14) plat comprenant, associé à la deuxième ouverture (28) de l'élément de chicane (14) plat, au moins un passage (30) qui relie la deuxième ouverture (28) à l'arbre de sortie (11) à proximité d'un des coussinets (20), caractérisée en ce que l'élément de chicane (14) plat est fixé par rapport au carter de telle sorte que la première ouverture (27) fait face à la périphérie (22) s'étendant vers le bas de l'élément de chicane (14) plat.

2. Boîte de vitesses selon la revendication 1, caractérisée en ce que ledit au moins un passage (30) est ménagé dans une surface transversale d'un prolongement cylindrique de ladite au moins une roue d'engrenage (12) qui est coaxial à l'arbre de sortie (11) et sur lequel le trou (15) central de l'élément de chicane (14) est soutenu.

3. Boite de vitesses selon la revendication 1, caractérisée en ce que ledit au moins un passage (30) a la forme d'une partie d'une spirale.

4. Boîte de vitesses selon la revendication 1, caractérisée en ce que ledit au moins un passage (30) est incliné vers l'arbre de sortie (11) cannelé.

5. Boîte de vitesses selon la revendication 1, caractérisée en ce que ledit au moins un passage (30) est composé de quatre canaux positionnés décalés d'environ 90° les uns des autres.

6. Boîte de vitesses selon la revendication 2, caractérisée en ce que le prolongement cylindrique de ladite au moins une roue d'engrenage (12) coaxial à l'arbre de sortie (11) et muni dudit au moins un passage (30) fait face à une partie d'entrée évasée à la périphérie, formée à l'avant d'une roue d'engrenage libre soutenue sur l'un des coussinets.

7. Boîte de vitesses selon la revendication 1, caractérisée en ce que ladite au moins une (12) des roues d'engrenage est celle se rapportant à la première vitesse.

8. Boîte de vitesses selon la revendication 1, caractérisée en ce que l'élément de chicane (14) est allongé vers le bas, où il est prévu un trou (23) parallèle à l'axe de l'arbre de sortie et dans lequel une tige de commande (24) des vitesses peut être insérée.
